# EUROPÄISCHE PATENTSCHRIFT

(11) **EP 0 862 985 B1**
(45) Veröffentlichungstag und Bekanntmachung des Hinweises auf die Patenterteilung: **27.06.2001**
(21) Anmeldenummer: 98100663.8
(22) Anmeldetag: 16.01.1998
(51) Int. Cl.: B29C 55/16

(54) **Führungsschiene für Spannkluppen in Spanmaschinen, insbesondere Folienreckmaschinen**
Guide rail for tentering clips in a stenter device, especially for film stretching
Rail de guidage pour pinces de serrage dans une rameuse, spécialement pour étirage de films

(30) Priorität: 03.03.1997 DE 19708620
(43) Veröffentlichungstag der Anmeldung: 09.09.1998
(73) Patentinhaber: LINDAUER DORNIER GESELLSCHAFT M.B.H, 88129 Lindau (DE)
(72) Erfinder: Rutz, Andreas, Dr., 88131 Lindau (DE)

(56) Entgegenhaltungen:
- DE-A- 2 360 335
- DE-U- 29 707 124
- GB-A- 1 136 709
- GB-A- 2 065 186
- US-A- 3 638 289
- US-A- 4 080 692

## Beschreibung

Die Erfindung betrifft eine Führungsschiene für Spannkluppen in Spannmaschinen, insbesondere Folienreckmaschinen, mittels der durch Modifikation im Bereich der Führung der Spannkluppen ein permanentes Anliegen aller Kluppenführungsrollen erreichbar ist.

Aus der DE-PS 25 58 765 ist eine Folienreckmaschine zum kontinuierlichen Behandeln eines bahnförmiges Gutes bekannt, mit jeweils einer an den beiden Bahnkanten vorhandenen Führungsschiene für Spannkluppen. Die Führungsschiene besteht aus einzelnen Federstahlbändern, die hochkant zum Behandlungsgut und zu dessen Ebene verlaufen und der Führung der Spannkluppen dienen.
Die Spannkluppen besitzen Paare von Führungsrollen zur Horizontalführung und Stützrollen zur Vertikalführung.

Aufgrund von Fertigungstoleranzen an den Spannkluppen, wie z.B. abweichende Achsabstandsmaße zwischen den vertikal ausgerichteten Führungsrollenachsen und aufgrund von Fertigungstoleranzen in der Dicke der gewalzten Federstahlbänder, kann sich zwischen den Führungsrollenpaaren und der Führungsschiene ein Spiel einstellen.
Dieses Spiel hat zur Folge, daß die Führungsrollen der Spannkluppen, mit Ausnahme der oberen Stützrollen, nicht immer an der Führungsschiene anliegen und sich damit nicht konstant drehen.
Je nach Belastung und Führung der Spannkluppen während des Folienreckprozesses kommen entweder erste Führungsrollen oder zweite Führungsrollen eines Führungsrollenpaares mit der Führungsschiene abwechselnd in Berührungskontakt. Das bedeutet, daß nach einem Abheben der Führungsrollen von der Führungsschiene und einem erneuten Anlegen der Führungsrollen an die Führungsschiene, diese Führungsrollen an ihrem Umfang innerhalb kurzer Zeit auf die Arbeitsgeschwindigkeit der Spannkluppenkette bzw. auf die Umfangsgeschwindigkeit der sich entsprechend der Arbeitsgeschwindigkeit drehenden Führungsrollen beschleunigt werden müssen.

Die Belastungswechsel der Kluppenkette und die damit einhergehenden ständigen Beschleunigungsvorgänge der Führungsrollen haben nachteilige Auswirkungen auf die Führungsschiene und auf die Führungsrollen selbst.
Dies sind im ungünstigen Fall Gleitvorgänge zwischen dem Führungsrollenaußenring und dem betreffenden äußeren Führungsband der Führungsschiene. Abhängig von der inneren Reibung der Führungsrollenlager und des Dichtungssystems der Führungsrollenlager können sich Beschädigungen durch Anschleifen des Führungsrollenaußenringes ergeben. Dies führt zu einer mechanischen Beschädigung und zum Verschleiß der äußeren Federbänder bzw. zum Anschleifen des Führungsrollenaußenringes der Führungsrollen. Bevor es zu diesen mechanischen Beschädigungen kommt, wird das Führungsrollenlager durch die Reibungswärme, die bei den Beschleunigungsvorgängen und bei dem damit verbundenen Gleiten entsteht, zusätzlich zu den relativ hohen Temperaturen im geheizten Bereich der Reckmaschine erwärmt.

Aus der DE 195 15 036 A1 sind Führungsschienen für Spannkluppen einer Reckanlage bekannt, die auf eine gegenüber dem Stand der Technik verbesserte Spannkluppenführung und im Zusammenhang damit auf die Erhöhung der Funktionstüchtigkeit und der Lebensdauer der Reckanlage abstellt.
Es wird vorgeschlagen, das Abstandsmaß zwischen den horizontalen und vertikalen Führungsflächen der Führungsschiene begrenzt veränderlich zu halten. Dazu ist zumindest eine Vorspann- und/oder Dämpfungseinrichtung vorgesehen, worüber zumindest eine der vorgenannten Führungsflächen lageveränderlich gehalten und/oder gedämpft abgestützt ist. Unabhängig von der Ausbildung der Führungsschiene, d.h. unabhängig davon, ob die Führungsschiene aus einem kompakten, einstückigen Teil oder aus einer Kombination unterschiedlich ausgebildeter Führungsschienenelemente besteht, sind umfassende Vorkehrungen zu treffen, um die entsprechenden Einrichtungen in die Führungsschiene zu integrieren.
Diese Vorkehrungen erfordern einen relativ hohen Fertigungs- und Montageaufwand.

Aufgabe der Erfindung ist es, eine Führungsschiene für Spannkluppen, insbesondere einer Folienreckmaschine zu schaffen, die ein zwischen Führungsrollenpaaren der Spannkluppen und der Führungsschiene auftretendes Spiel ohne einen nennenswerten Kostenmehraufwand kompensiert.

Erfindungsgemäß wird die Aufgabe durch die Merkmale der Patentansprüche 1, 5 und 10 gelöst.

Die an sich bekannten Führungsschienen bestehen aus mehreren nebeneinander angeordneten und miteinander verspannten Federstahlbändern.
Davon ausgehend könnte durch eine Modifizierung eines oder mehrerer Federstahlbänder der bekannten Führungsschienen eine gewisse Federwirkung im Dickenaufbau der Führungsschiene erreichbar sein.
Gemäß der Erfindung entsteht eine in der Dicke federelastisch ausgebildete Führungsschiene dadurch, daß die Führungsschiene wenigstens ein Federstahlband besitzt, das in seiner Längserstreckung als federelastisches Bauteil ausgebildet ist und zusammen mit den übrigen Federstahlbändem der Führungsschiene in der Dicke federelastisch ist.
Dadurch wird es möglich, daß die der Horizontalführung der Kluppe dienenden Führungsrollen ständig, und zwar unabhängig vom Belastungszustand der Kluppen, mit den äußeren Federstahlbändern in Kontakt stehen.
Je nach Art und Lage der sich auf die Führungsrollen auswirkenden Fertigungstoleranzen der Spannkluppe, insbesondere Toleranzen in den Achsabständen der vertikal ausgerichteten Achsen der Führungsrollen, kompensiert die Führungsschiene diese Toleranzen durch ihre federelastische Ausbildung.

Mit der Erfindung wird eine längere Lebensdauer der Führungsrollen der Spannkluppen und eine längere Lebensdauer zumindest der mit den Führungsrollen in Kontakt stehenden Federstahlbänder der Führungsschiene erreicht.
Eine andere Möglichkeit ist, die Führungsrollen der Spannkluppe toleranzkompensierend in Bezug auf die Führungsschiene auszubilden. Diese Lösung ist jedoch im Vergleich mit der erfindungsgemäßen Lösung kostenungünstig.

Die Erfindung soll nachstehend anhand eines Ausführungsbeispiels näher erläutert werden.

Es zeigen:
- Figur 1: schematisch eine mit einem Stützelement verbundene Führungsschiene mit federelastischen äußeren Bauteilen,
- Figur 2: schematisch das Rollteil einer Spannkluppe in Verbindung mit einer Führungsschiene,
- Figur 3: schematisch eine Federstahlbandanordnung mit innen liegenden federelastisch ausgebildeten Bauteilen,
- Figur 4: schematisch ein Federstahlband als federelastisches Bauteil,
- Figur 5: schematisch eine Federstahlbandanordnung mit einem außen liegenden als federelastisches Bauteil ausgebildetes Federstahlband,
- Figur 6: schematisch eine Federstahlbandanordnung mit einem innen liegenden als federelastisches Bauteil ausgebildetes Federstahlband,
- Figur 7: schematisch einen Führungsschienenabschnitt einer Federstahlbandanordnung, die ein innen liegendes als federelastisches Bauteil ausgebildetes Federstahlband besitzt,
- Figur 8: schematisch eine Führungsschiene im Schnitt mit einem symmetrisch in der Federstahlbandanordnung integrierten Distanzstück,
- Figur 9: schematisch das Rollteil einer Spannkluppe in Verbindung mit einer Führungsschiene, mit einem asymmetrisch in die Federstahlbandanordnung integrierten Distanzstück.

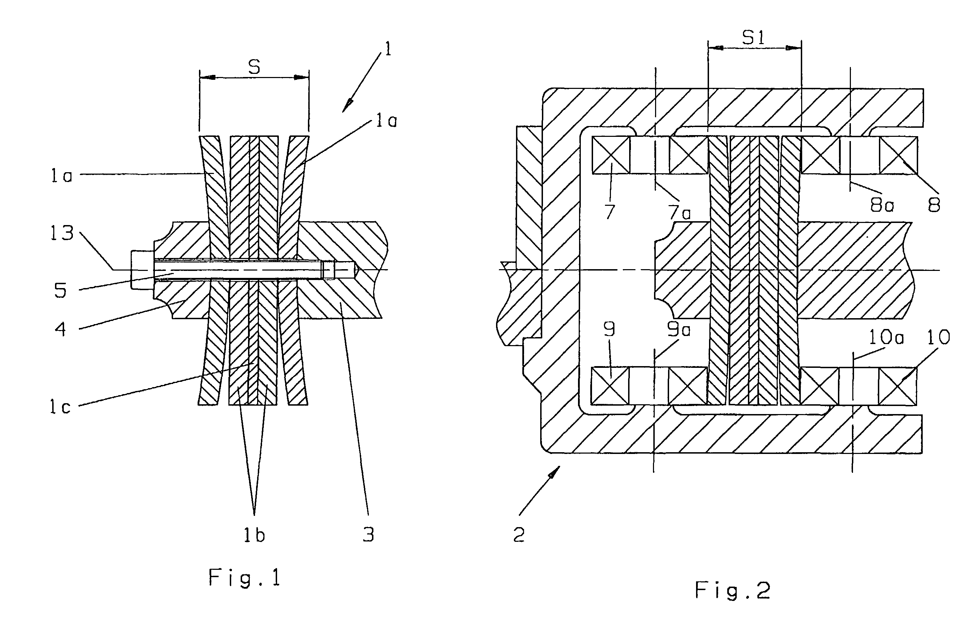

In Figur 1 besteht die Führungsschiene 1 aus insgesamt fünf Federstahlbändern 1a,1b,1c,1b,1a, die zwischen einem Stützelement 3, das maschinenfest in der Reckmaschine angeordnet ist, und einem Klemmteil 4 mittels eines Verbindungselementes 5 verspannt sind. Die beiden äußeren Federstahlbänder la sind dabei erfindungsgemäß so ausgeführt, daß diese über ihre hier nicht angegebene Länge um eine imaginäre Mittenachse eine kontinuierlich verlaufende innere Wölbung mit einem Radius R aufweisen. Der Radius kann dabei eine Größe von etwa 3000 mm bis etwa 6000 mm aufweisen.
Entscheidend ist, daß die außerhalb des Spannbereiches liegenden Federstahlbandabschnitte nach dem Verspannen mit den Bändern 1b,1c,1b nach außen hin gewölbt sind. Damit ist die Dicke S der Führungsschiene 1 außerhalb ihrer Einspannung und zu den freien Enden hin um den Betrag S minus S1 vergrößert, wobei S das Abstandsmaß zwischen den Außenkanten der gewölbten Federstahlbänder la ist und S1 das Abstandsmaß zwischen den Umfangsflächen der einander gegenüber angeordneten Führungsrollenpaare 7,8;9,10 ist. Der Betrag S wird mit dem Einführen der Spannkluppen 2, siehe auch Figur 2, soweit zwangsweise reduziert, daß die oberen Führungsrollenpaare 7;8, von denen jeweils nur eine Führungsrolle sichtbar ist, und die unteren Führungsrollenpaare 9;10, von denen ebenfalls jeweils nur eine Führungsrolle sichtbar ist, stets, aufgrund der sich aus der Wölbung der Federstahlbänder 1a ergebenden Elastizität, an den vertikalen Außenflächen der äußeren Federstahlbänder anliegen. Eventuell vorhandene Toleranzen, z.B. zwischen den Achsabständen der vertikal ausgerichteten Achsen 7a,8a;9a,10a zweier Führungsrollenpaare 7,8;9,10, werden durch die mit der Wölbung erreichte Elastizität der Federstahlbänder la kompensiert.

Figur 2 zeigt eine Federstahlbandanordnung gemäß Figur 1 mit der von der Führungsschiene 1 aufgenommenen Spannkluppe 2.
Mit dem Aufnehmen der Spannkluppe 2 sind die äußeren Bänder 1a der Führungsschiene 1 unter Ausnutzung ihrer Elastizität an die vertikal verlaufenden Laufflächen der Führungsrollenpaare 7,8;9,10 herangeführt. Zwischen den Führungsrollenpaaren und den äußeren Federstahlbändern 1a besteht hiernach eine hinreichende und permanente Anlage.

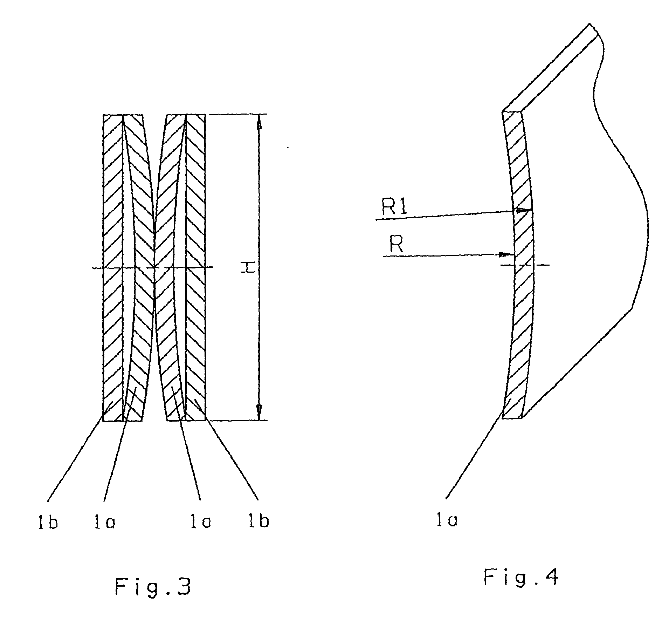

Figur 3 zeigt eine Federstahlbandanordnung mit vier Federstahlbändern 1b,1a,1a,1b. Hier sind die inneren Federstahlbänder 1a als federelastische Bauteile ausgebildet.
Dieser Aufbau besitzt im Vergleich zu der Federstahlbandanordnung gemäß Figur 1 eine vergleichsweise höhere Federcharakteristik.

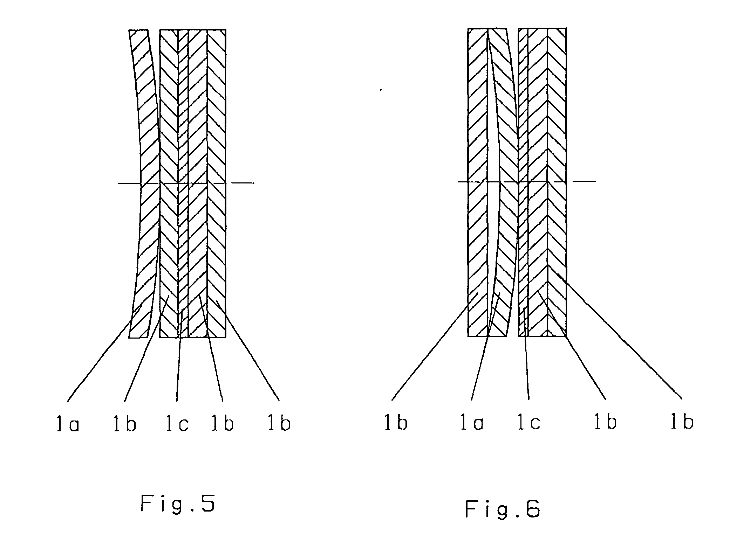

Figur 4 zeigt ein gewölbtes Einzelfederstahlband la gemäß der Figuren 1 und 3 und der folgenden Figuren 5, 6, dessen Innenkontur einen Krümmungsradius R und dessen Außenkontur einen Krümmungsradius R1 besitzt. Dieses Federstahlband ist sowohl als außen liegendes als auch als innen liegendes federelastisches Bauteil einer Führungsschiene 1 einsetzbar.

Die Figuren 5 und 6 stellen Modifikationen hinsichtlich der Anordnungen eines federelastisch ausgebildeten Bauteils und der Anzahl von Federstahlbändern in einer Führungsschiene 1 dar.

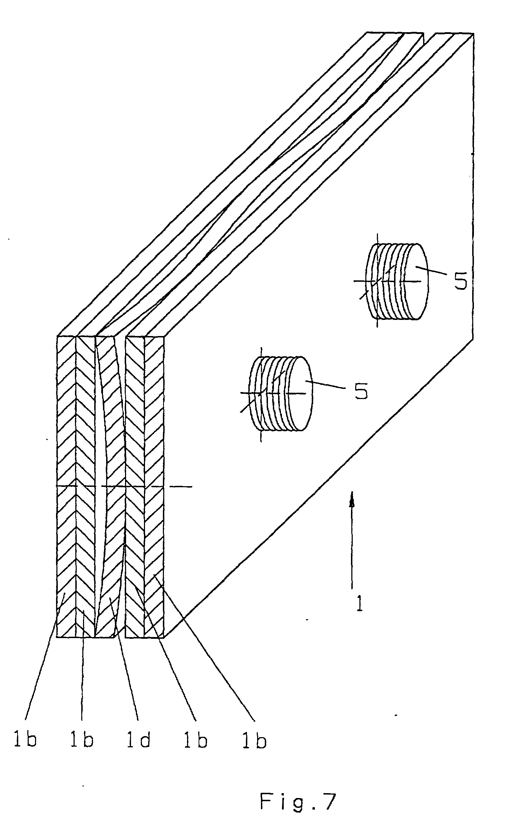

Figur 7 zeigt ein in die Führungsschiene 1 integriertes federelastisches Bauteil ld zwischen ebenflächig ausgebildeten Federstahlbändern 1b.
Das federelastische Bauteil ld ist hier nicht im Sinne des in der Figur 4 gezeigten Einzelfederstahlbandes 1a gewölbt, sondern hier weisen die oberen und unteren Randbereiche einen über die Längserstreckung des Federstahlbandes la sinusförmigen Verlauf auf.
In besonderer Ausgestaltung dieses federelastischen Bauteils 1d kann der sinusförmige Verlauf der Randbereiche gleichlaufend oder gegenläufig ausgebildet sein.
Über die Dicke des Federstahlbandes ld, und die Anzahl der Amplituden je Längeneinheit des Bandes, kann die Steifigkeit und der Federweg des biegeelastischen Bauteils gezielt beeinflußt werden.

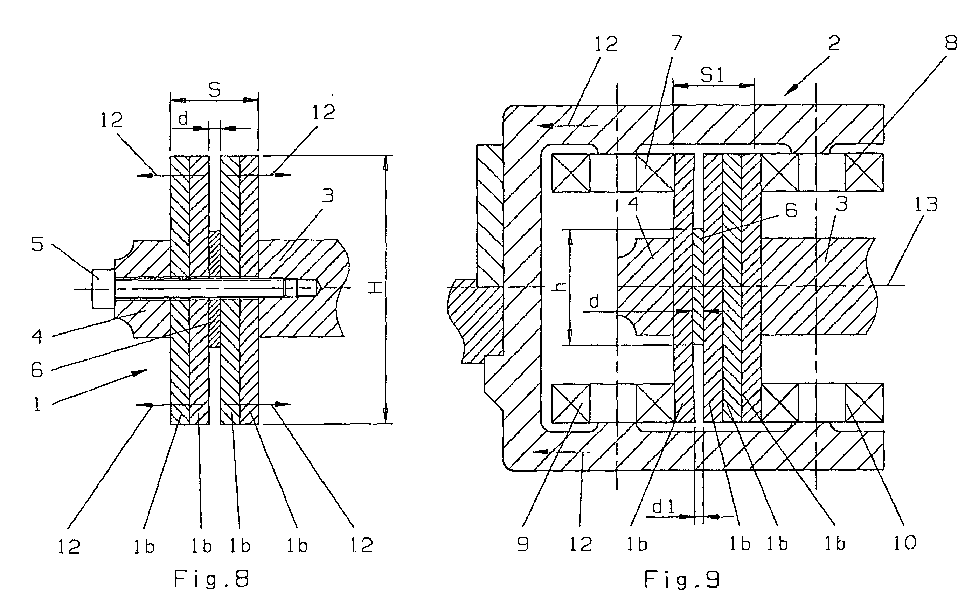

Figur 8 zeigt eine grundsätzlich andere Möglichkeit die erfindungsgemäße Aufgabe zu lösen. Die Führungsschiene 1 besteht aus vier ebenflächig ausgebildeten Federstahlbändern 1b und aus einem symmetrisch zwischen den Bändern 1b angeordneten Distanzstücke 6. Die Federstahlbänder 1b und das Distanzstück 6 mit der Dicke d sind zwischen dem Stützelement 3 und dem Klemmteil 4 mittels des Verbindungselementes 5 verspannt.

Die Breite S der Führungsschiene 1 ist größer als das Abstandsmaß S1 zwischen dem einander gegenüberliegenden Führungsrollen der Führungsrollenpaare 7,8 bzw. 9,10, siehe auch Figur 9.
Die Höhe h des Distanzstückes 6 ist im Vergleich zur Höhe H der Federstahlbänder 1b geringer ausgelegt und zwar insoweit, daß die ungespannten Bereiche der Federstahlbänder 1b federelastisch bewegbar bleiben, um die sogenannten Toleranzen in den Spannkluppen 2 relativ gleichmäßig in Richtung der Pfeile 12 kompensieren zu können.
Durch entsprechende Wahl der Dicke d und Höhe h des Distanzstückes 6 kann die Federkennlinie der benachbarten Federstahlbänder 1b direkt beeinflußt werden.

Figur 9 zeigt eine Federstahlbandanordnung einer Führungsschiene 1 mit einem asymmetrisch zwischen den Federstahlbändern 1b angeordneten Distanzstück 6 mit der Dicke d.
Das Abstandmaß S des Federstahlbandpaketes im unbelasteten Zustand verändert sich mit Einrühren der Spannkluppe 2 mit dem gegebenen Abstandsmaß S1 der Führungsrollen 7,8 und 9,10. Die Differenz wird federnd im Federstahlband 1b aufgenommen. Die Dicke d des Distanzstückes 6 entspricht in der Figur 9 dem Abstandsmaß d. Das Abstandsmaß d verringert sich, nachdem die Spannkluppen durch die Führungsschiene 1 aufgenommen sind, zu dem Abstandmaß d1.

Eine solche Anordnung ist zweckmäßig, wenn im Reckprozeß Zugkräfte überwiegend in Richtung der Pfeile 12 in der Spannkluppe 2 wirksam sind.
Aufgrund der höheren Federsteifheit der Federbandkombination mit drei Federstahlbändern 1b kann eine solche Führungsschiene 1 den Zugkräften in Richtung der Pfeile 12 besser entgegenwirken als eine Führungsschiene 1 nach der Ausbildung gemäß Figur 8.

### ZEICHNUNGS-LEGENDE

- 01: Führungsschiene
- 01a: Federstahlband
- 01b: Federstahlband
- 01c: Federstahlband
- 01d: Federstahlband
- 02: Spannkluppe
- 03: Stützelement
- 04: Klemmteil
- 05: Verbindungselement
- 06: Distanzstück
- 07: Führungsrollenpaar
- 07a: Achse
- 08: Führungsrollenpaar
- 08a: Achse
- 09: x Führungsrollenpaar
- 09a: Achse
- 10: Führungsrollenpaar
- 10a: Achse
- 11: Stützrolle
- 12: Pfeil
- 13: Spannebene
- d: Dicke Distanzstück, Abstandsmaß
- d1: Abstandsmaß
- H: Höhe Federstahlband
- h: Höhe Distanzstück
- R: Krümmungsradius Innen
- R1: Krümmungsradius Außen
- S: Abstandsmaß
- S1: Abstandsmaß

## Patentansprüche

1. Führungsschiene für Spannkluppen in Spannmaschinen, insbesondere Folienreckmaschinen, bestehend aus äußeren und inneren Federstahlbändern, die über ihre Länge eine gleichbleibende Bandbreite besitzen, und die zusammen quer zu ihrer Längserstreckung von Stützelementen der Folienreckmaschine getragen und mit den Stützelementen verbunden sind, **dadurch gekennzeichnet,** daß die Führungsschiene (1) zusäztlich wenigstens ein mit den Stützelementen (3) verbundenes, federelastisch ausgebildetes Bauteil (1a) in Art eines Federstahlbandes besitzt, das quer zur Längserstreckung der Führungsschiene (1) federelastisch ist.

2. Führungsschiene nach Anspruch 1, **dadurch gekennzeichnet,** daß das federelastische Bauteil (1a) über seine Länge eine um eine imaginäre Mittenachse kontinuierlich verlaufende innere und äußere Wölbung besitzt.

3. Führungsschiene nach Anspruch 2, **dadurch gekennzeichnet,** daß die innere Wölbung einen Radius (R) von größer als 3000 mm aufweist.

4. Führungsschiene nach Anspruch 1 bis 3, **dadurch gekennzeichnet,** daß wenigstens ein äußeres Federstahlband der Führungsschiene (1) als federelastisches Bauteil (1a) ausgebildet ist.

5. Führungsschiene nach Anspruch 1 bis 3, **dadurch gekennzeichnet,** daß wenigstens ein inneres Federstahlband der Führungsschiene (1) als federelastisches Bauteil (1a) ausgebildet ist.

6. Führungsschiene für Spannkluppen in Spannmaschinen, insbesondere Folienreckmaschinen, bestehend aus äußeren und inneren Federstahlbändern, die über ihre Länge eine gleichbleibende Bandbreite besitzen, und die zusammen quer zur ihrer Längserstreckung von Stützelementen der Folienreckmaschine getragen und mit den Stützelementen verbunden sind, **dadurch gekennzeichnet,** daß zwischen zwei einander benachbarten Federstahlbändern (1b) ein Distanzstück (6) eingeordnet ist und mit den Stützelementen (3) verbunden ist, wodurch die freien vertikalen Enden der Federstahlbänder (1b) elastisch sind.

7. Führungsschiene nach Anspruch 6, **dadurch gekennzeichnet,** daß das Distanzstück (6) eine geringere Höhe (h) besitzt, als die Federstahlbänder (1b).

8. Führungsschiene nach den Ansprüchen 6 und 7, **dadurch gekennzeichnet,** daß das Distanzstück (6) symmetrisch zwischen den Federstahlbändern (1b) angeordnet ist.

9. Führungsschiene nach den Ansprüchen 6 und 7, dadurch gekennzeichnet, daß das Distanzstück (6) asymmetrisch zwischen den Federstahlbändern (1b) angeordnet ist.

10. Spannmaschine, insbesondere Folienreckmaschine zum biaxialen Recken von thermoplastischen Folien mittels Spannkluppen, die zu ihrer Horizontalführung ein erstes und ein zweites Paar oberer Führungsrollen und ein erstes und zweites Paar unterer Führungsrollen und wenigstens eine Stützrolle zu ihrer Vertikalführung besitzen und wobei eine aus mehreren Federstahlbändern bestehende Führungsschiene vorhanden ist, **gekennzeichnet durch** eine Führungsschiene (1) nach einem der Ansprüche 1 bis 9, wonach unabhängig vom Betriebszustand der Spannkluppen (2) zwischen den Führungsrollenpaaren (7,8) und der Führungsschiene (1) einerseits und den Führungsrollenpaaren (9,10) und der Führungsschiene (1) anderseits ein permanenter Berührungskontakt besteht.

## Claims

1. Guide rail for tentering clips in tentering machines, in particular film stretching machines, comprising outer and inner spring steel strips which have a constant strip width over the length thereof and which are supported together, transversely to the longitudinal extension thereof, by support elements of the film stretching machine and which are connected to the support elements, characterised in that the guide rail (1) additionally has at least one resilient component (1a) which is in the form of a spring steel strip, which is connected to the support elements (3) and which is resilient transversely to the longitudinal extension of the guide rail (1).

2. Guide rail according to claim 1, characterised in that the resilient component (1a) has, over the length thereof, an inner and outer curvature which extends continuously about an imaginary centre axis.

3. Guide rail according to claim 2, characterised in that the inner curvature has a radius (R) which is greater than 3000 mm.

4. Guide rail according to claims 1 to 3, characterised in that at least one outer spring steel strip of the guide rail (1) is in the form of a resilient component (1a).

5. Guide rail according to claims 1 to 3, characterised in that at least one inner spring steel strip of the guide rail (1) is in the form of a resilient component (1a).

6. Guide rail for tentering clips in tentering machines, in particular film stretching machines, comprising outer and inner spring steel strips which have a constant strip width over the length thereof and which are supported together, transversely to the longitudinal extension thereof, by support elements of the film stretching machine and which are connected to the support elements, characterised in that a spacing element (6) is interposed between two mutually adjacent spring steel strips (1b) and is connected to the support elements (3), as a result of which the free vertical ends of the spring steel strips (1b) are resilient.

7. Guide rail according to claim 6, characterised in that the spacing element (6) has a height (h) which is smaller than that of the spring steel strips (1b).

8. Guide rail according to claim 6 and claim 7, characterised in that the spacing element (6) is arranged symmetrically between the spring steel strips (16).

9. Guide rail according to claim 6 and claim 7, characterised in that the spacing element (6) is arranged asymmetrically between the spring steel strips (1b).

10. Tentering machine, in particular film stretching machine for bi-axial stretching of thermoplastics films by means of tentering clips which have a first and a second pair of upper guide rollers for the horizontal guiding thereof and a first and a second pair of lower guide rollers and at least one support roller for the vertical guiding thereof and wherein there is provided a guide rail which comprises a plurality of spring steel strips, characterised by a guide rail (1) according to any one of claims 1 to 9, according to which there is permanent tangential contact, irrespective of the operating state of the tentering clips (2), between the pairs of guide rollers (7, 8) and the guide rail (1), on the one hand, and the pairs of guide rollers (9, 10) and the guide rail (1), on the other.

## Revendications

1. Rail de guidage destiné à des griffes de serrage dans des machines à tendre, en particulier dans des machines d'étirage de feuilles, se composant de bandes d'acier à ressort extérieures et intérieures qui possèdent une largeur de bande constante sur toute leur longueur, et qui sont supportés conjointement par des éléments de support de la machine d'étirage de feuilles perpendiculairement à leur prolongement longitudinal et qui sont reliés aux éléments de support, caractérisé en ce que le rail de guidage (1) possède en outre au moins un élément (la) du type bande d'acier à ressort, présentant une flexibilité de ressort et relié aux éléments de support (3), laquelle bande présente une flexibilité de ressort perpendiculairement au prolongement longitudinal du rail de guidage (1).

2. Rail de guidage selon la revendication 1, caractérisé en ce que l'élément (la) présentant une flexibilité de ressort possède une courbure intérieure et extérieure s'étendant de manière continue sur toute la longueur de ce dernier autour d'un axe médian imaginaire.

3. Rail de guidage selon la revendication 2, caractérisé en ce que la courbure intérieure présente un rayon (R) de taille supérieure à 3000 mm.

4. Rail de guidage selon l'une quelconque des revendications 1 à 3, caractérisé en ce qu'au moins une bande d'acier à ressort extérieure du rail de guidage (1) est conçue en tant qu'élément (la) présentant une flexibilité de ressort.

5. Rail de guidage selon l'une quelconque des revendications 1 à 3, caractérisé en ce qu'au moins une bande d'acier à ressort intérieure du rail de guidage (1) est conçue en tant qu'élément (1a) présentant une flexibilité de ressort.

6. Rail de guidage destiné à des griffes de serrage dans des machines à tendre, en particulier dans des machines d'étirage de feuilles, se composant de bandes d'acier à ressort extérieures et intérieures qui possèdent une largeur de bande constante sur toute leur longueur, et qui sont supportées conjointement par des éléments de support de la machine d'étirage de feuilles perpendiculairement à leur prolongement longitudinal et qui sont reliés aux éléments de support, caractérisé en ce qu'une pièce d'écartement (6) est intercalée entre deux bandes d'acier à ressort (1b) adjacentes l'une à l'autre et en ce qu'elle est reliée aux éléments de support (3), moyen par lequel les extrémités verticales libres des bandes d'acier à ressort (1b) sont élastiques.

7. Rail de guidage selon la revendication 6, caractérisé en ce que la pièce d'écartement (6) possède une hauteur (h) inférieure à celle des bandes d'acier à ressort (1b).

8. Rail de guidage selon les revendications 6 et 7, caractérisé en ce que la pièce d'écartement (6) est disposée de manière symétrique entre les bandes d'acier à ressort (1b).

9. Rail de guidage selon les revendications 6 et 7, caractérisé en ce que la pièce d'écartement (6) est disposée de manière asymétrique entre les bandes d'acier à ressort (1b).

10. Machines à tendre, notamment machines d'étirage de feuilles pour l'étirage biaxial de feuilles thermoplastiques au moyen de griffes de serrage qui, pour leur guidage horizontal, possèdent une première et une deuxième paire de rouleaux de guidage supérieurs ainsi qu'une première et une deuxième paire de rouleaux de guidage inférieurs et, pour leur guidage vertical, au moins un rouleau d'appui, moyennant quoi il existe un rail de guidage composé de plusieurs bandes d'acier à ressort, caractérisées par un rail de guidage (1) selon l'une quelconque des revendications 1 à 9, selon lesquelles il existe un contact permanent entre les paires de rouleaux de guidage (7, 8) et le rail de guidage (1) d'une part, et entre les paires de rouleaux de guidage (9, 10) et le rail de guidage (1) d'autre part, indépendamment de l'état de marche des griffes de serrage (2).
